# EUROPEAN PATENT APPLICATION

(11) **EP 2 963 603 A1**
(43) Date of publication of application: **06.01.2016**
(21) Application number: 14175696.5
(22) Date of filing: 03.07.2014
(51) Int. Cl.: G06Q 20/32, G06F 21/32, G06Q 20/40, G07C 9/00

(54) **Method and device for secure identification of a user of a service**

(71) Applicant: NXP B.V., 5656 AG Eindhoven (NL)
(72) Inventor: Bouffioux, Alain, 5656 AG Eindhoven (NL)
(74) Representative: Krott, Michel

(57) **Abstract**

A method for secure identification of a user of a service comprises the steps of:
- providing an identification device (10) including a plurality of sensors (101, 102, 103, 104) for acquiring a plurality of actual physical parameter of the user, a processing unit (120), a memory (125) for storing reference physical parameters and a communication unit (150, 160) for exchanging signals with a provider of the service,
- acquiring the plurality of actual physical parameters of the user,
- comparing the plurality of actual physical parameter with stored reference physical parameters,
- producing an identification signal based on the step of comparing for enabling or disabling the use of the service by the user,
- transmitting the identification signal to the provider of the service.

## Description

### FIELD OF THE INVENTION

The present invention relates to a method and an identification device for secure identification of a user of a service. Particularly, but not exclusively, the method and the identification device of the present invention are used for secure identification of a user of a service involving money transfer.

### BACKGROUND OF THE INVENTION

Current implementation of a validated identification process of a user of a service involving money transfer (e.g.: money withdrawal from an automatic machine or electronic payment at a physical shop) is generally a two steps approach:
- firstly the user is identified as the user of an object (e.g.: a credit card, an identity card, a key or similar) and
- secondly the user is authenticated as the owner when he proves he knows secret data (e.g.: a PIN) associated with the object identifying him.

This identification technique has already proven its weaknesses as it is sufficient, for example, to steal a credit card (or the card data) as well as to steal or guess the secret in order to access a service under the theft identity.

### OBJECT AND SUMMARY OF THE INVENTION

It may be an object of the present invention to provide a method and an identification device for secure identification of a user of a service with improved security with respect to existing method and devices, by making the system more robust against any external attack. It may be a further object of the present invention to provide a method and an identification device which avoids the need for the user to memorize and provide a secret data, for example in the form of a PIN. It may be a further object of the present invention to provide a method and an identification device which makes it possible to securely identify a user of a service, without the need of secret data to be directly provided directly by the user.

In order to achieve the objects defined above, a method and an identification device for identifying a user of a service according to the independent claims are provided. The dependent claims describe advantageous developments and modifications of the invention.
According to a first expect of the present invention, a method for identifying a user of a service comprising the steps of:
- providing an identification device including a plurality of sensors for acquiring a plurality of actual physical parameter of the user, a processing unit, a memory for storing reference physical parameters and a communication unit for exchanging signals with a provider of the service,
- acquiring the plurality of actual physical parameters of the user,
- comparing the plurality of actual physical parameter with stored reference physical parameters,
- producing an identification signal based on the step of comparing for enabling or disabling the use of the service by the user,
- transmitting the identification signal to the provider of the service.

With "service" it is meant any service, the access of which requires the identification of an owner or entitled person. For example the "service" may be a payment or withdrawal of money, or similar.

With "physical parameter" it is meant any biometric datum which univocally identifies a person.

With "identification" it is meant the process of recognizing if a user of a service is or is not entitled to the service.

With "identification signal" it is meant any signal comprising the information that the user of a service is entitled to the service (i.e. the user is authenticated as "owner") or that the user is not entitled to the service (i.e. the user is not authenticated as "owner").

Further on, with "authentication" it is therefore meant the positive response to the identification process, i.e. recognizing that the user is the "owner", i.e. is entitled to the service.

Advantageously, the addition of multidimensional biometric data in the identification process protects the owner, i.e. the authorized user, from theft of identity, without the use of any additional secret datum to be provided. User is identified by a plurality of physical parameters, which may include the heart waveform or the vocal track. In all possible embodiments of the present invention, the user is analyzed by means of a plurality of sensors in order to extract some physical parameters related to the user.

After that, the step of providing of the secret datum is substituted by the step of producing a signal depending from the physical parameters and enabling or disabling the requested service. The step of memorizing the secret datum, which can be stolen, is therefore substituted by the steps of acquiring an actual physical parameter of the user and of confronting it with a stored reference physical parameter, identifying the owner. Being univocally dependent from the user, the physical parameters cannot be stolen or replayed. The need for the user to possess an object (e.g. the credit card) and a secret datum (e.g. the PIN), which can be both stolen and easily used, is substituted by the need of having only one object (an identification device), which can be still stolen, but which will deny access to the service if the user is not the owner.

According to exemplary embodiments of the present invention the sensor or sensors for the acquisition of such physical parameters may be:
- a microphone for registering the voice of the user,
- an accelerometer for measuring the movements of at least a portion of the body, e.g. the wrist, of the user,
- an ECG probe for measuring the heartbeat and the heartbeat waveform of the user.

The sensors are chosen in order that the measured physical parameters are used to define the user uniquely and independently from the environmental condition of the user, e.g. from the voice registered by the microphone, the parameters characterizing a vocal track of the speakers can be derived which are independent from the sentence pronounced or from data acquired by the ECG probe, the parameters characterizing a heart waveform can be derived which are independent from emotional conditions or activity level.

According to exemplary embodiments of the present invention, the method further comprises determining the geographic position of the user.

Advantageously, information about geographic position of the user can be used to further detect abnormal situation. Typically, each user accesses a service in a limited number of places. By identifying an actual position of the user, the method can deny access to the service or generate a warning or prompt the user for further information, if a position is detected which is remote from the normal habitual positions where the user accesses the service.

According to a further exemplary embodiment of the present invention, the method further comprises:
- challenging the user with a challenge signal,
- receiving a response signal from the user to the challenge signal, the response signal characterizing the user,
- producing the identification signal based on the response signal.

Advantageously, if a position is detected which is remote from the normal habitual positions where the user accesses the service, the user may be challenged, e.g. by requesting a sentence to be pronounced. This sentence is used to compute a model of the vocal track of the user to be compared with the stored reference vocal track of the user entitled to receive the service, i.e. the owner. If the user vocal track is equal to the reference vocal track the user is authenticated as the owner and access to service enabled.

According to a second expect of the present invention, an identification device including a plurality of sensors for acquiring a plurality of physical parameters of the user, a memory for storing reference physical parameters, a processing unit configured for comparing the plurality of physical parameters with the reference physical parameters stored in the memory and for generating a signal enabling or disabling the use of a service by the user and a communication unit for transmitting the signal.

Advantageously, according to an exemplary embodiment of the present invention, the identification device is comprised in a wristwatch, thus assuring that it is promptly available to the user and that the identification process can be completed easily, each time it is needed.

According to other exemplary embodiment of the present invention, the identification device may be included in a necklace, a device integrated in a piece of clothing, or in general any device which is subject to be in contact with a portion of the human body which allows physical parameters to be measured.

The identification device may also be composed of multiple parts communicating with each other's, For instance a sensor located in a necklace, another one located in a piece of clothing and the remaining functions located in a wristwatch.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### BRIEF DESCRIPTION OF THE DRAWINGS

Fig. 1 shows a schematical view of a wristwatch including an identification device according to present invention,
Fig. 2 shows a schematical block view of an identification device according to present invention.

### DESCRIPTION OF EMBODIMENTS

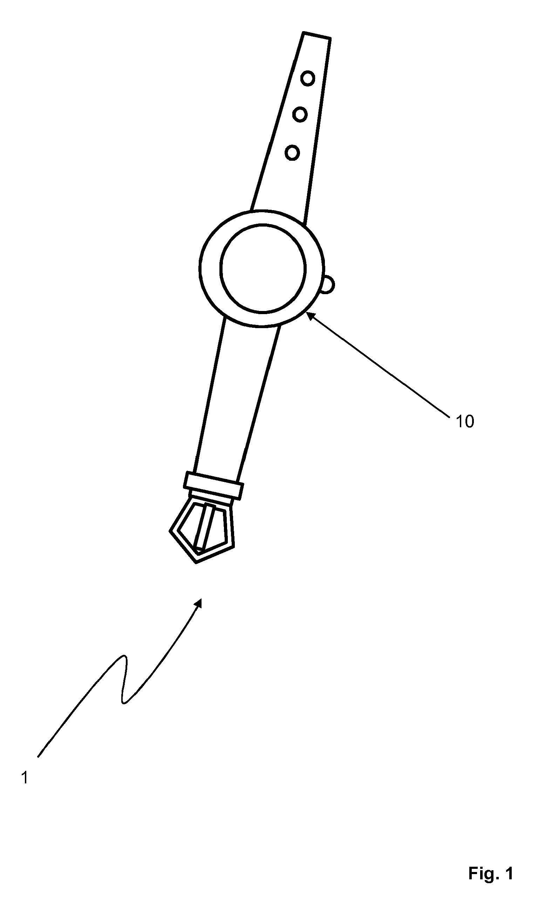

Fig. 1 schematically shows a wristwatch 1 including an identification device 10.

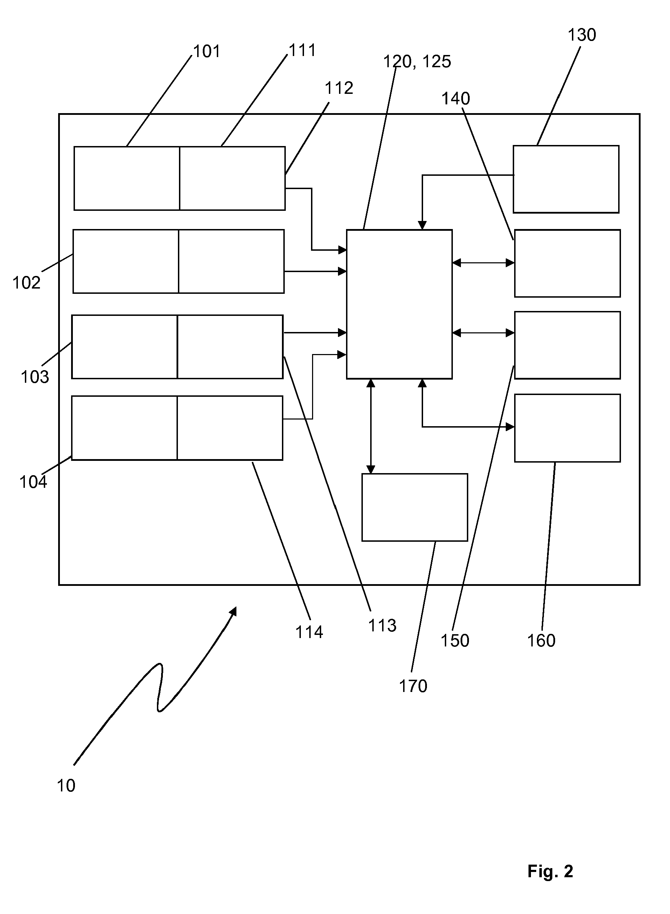

Fig. 2 schematically shows a block diagram of the identification device 10.

The identification device 10 comprises a plurality of sensors 101, 102, 103, 104 for converting a physical parameter associated with a user of the device 10 into an electric analog waveform.

The sensors comprised in the identification device 10 are:
- a MEMS ("Micro Electro Mechanical System") microphone 101 for registering a vocal track of the user of the device 10,
- an accelerometer 102 for measuring the movements of at least a portion of the body of the user. With reference to the embodiment of Fig. 1, accelerometer 102 measures the movement of the wrist of the user, for example while making some predefined movements, for example walking. In such case the measured movement make it possible to compute the parameters characterizing the walking behaviour of the user,
- an ECG probe 103 for providing waveform and/or rhythm of the heartbeat of the user,
- a skin contact detector 104 for detecting if the identification device is in contact with the user. According to possible embodiments of the present invention, the skin contact detector 104 is not present and the function of detecting if the identification device is in contact with the user is instead performed by the ECG probe 103.

Each sensor 101, 102, 103, 104 is respectively connected to a signal processing module 111, 112, 113, 114 for signal conditioning and/or filtering, in order, for example, to reduce noises and errors of the analog signals created during acquisition, of the analog signals provided by sensors 101, 102, 103, 104. Signal processing modules 111, 112, 113, 114 also perform Analog-to-Digital conversion of the conditioned and/or filtered analog signals for respectively providing a plurality of digital signals corresponding to the physical parameters of the user measured by the sensors 101, 102, 103, 104. The digital signal transferred to a processor 120 connected to the signal processing modules 111, 112, 113, 114. In the processor 120 signals can be elaborated to derive further parameters associated with the user. For example, according to possible embodiments of the present invention, heart rate measured by ECG probe 103 can be correlated with the level of activity measured by accelerometer 102 in order to define, for example if a high heart rate is a normal characteristic of the user or if it is instead dependent on the level of activity or if it is instead caused by a high level of stress which could be cause by a theft's threat or another abnormal situation.

According to possible embodiments of the present invention, the identification device 10 comprises a humidity detector (not shown in **Fig. 2**), and the processor 120 combines data from the humidity detector with data from the ECG probe in order to make an estimation of the stress level in the user.

The identification device 10 further comprises a memory 125 for storing:
- physical parameter associated to a user being the owner of the identification device 10. Owner's data are recorded once at the first startup of the identification device 10 and updated at the request of the user who has identified as the owner,
- physical parameter associated to a user being the carrier of the identification device 10. Data of the carrier are continuously updated, for instance at a specified time interval, at second and subsequent startup of the identification device 10. With reference to the embodiment of **Fig. 1****,** startup may occur each time the skin contact detector 104 or ECG probe 103 detects that the wristwatch is placed around the wrist,
- other data, for example, according to possible embodiments of the present invention, about localization of the identification device 10 when in use, by means of a further GPS sensor included in identification device 10 or by means of a connection to another device, for example a smartphone capable of localizing its position.

According to possible embodiments of the present invention, processor 120 and memory are integrated in a single logic unit.

The identification device 10 further comprises:
- a UID ("Unique IDentification" number) unit 140 for univocally identifying each identification device 10 from the others,
- a power supply interface 130, for example magnetic induction or USB based, for charging. In the case of USB interface, the identification of the charger could also be requested to enable charging only after the environment has been checked (i.e. if the device is being charged always with the same charger at the same location), in order to improve security,
- a NFC ("Near Field Communication") communication unit 160 for communicating with an external terminal (for example an automated machine for money withdrawal) providing the access point to a requested service, for example a withdrawal of money. Via the NFC communication unit 160 the identification device 10 provides identification and authentication of the user identity as owner of the identification device 10, according to a procedure better explained further below. As an alternative to the NFC communication unit, any other type of communication unit can be used,
- a Bluetooth communication unit 160 for collecting context information around the identification device 10 for further improving the security. The context information, for example, may be the UIDs of other proximal devices in its vicinity. As described above this may be the direct connection to a smartphone of the user of the identification device 10 to get its localization information. Information of location may be also used to make identification conditional to a predefined location, e.g. withdrawal of money only when user is inside a specific bank.
- a user interface 170 including a display for displaying requests and a keyboard for entering responses. Such user interface may also be interconnected to other electronics modules, for example integrated in the dial of a wristwatch.

According to the present invention, a method for identifying a user of a service, using wristwatch 1, is here below described. According to possible embodiments of the present invention (not shown in the drawings), instead of the wristwatch 1, another object which is in contact with a portion of the human body may be used, for example a necklace or a device integrated in a piece of clothing. In general, the object including the identification device 10 has to stay at a distance from the user which allows physical parameters of the user to be measured.

The method comprises a preliminary step during which the owner of the wristwatch 1 is identified and registered, for example by a bank authority, as the person entitled to receive a certain service, for example withdrawal of money from the automatic withdrawal machines of the bank.

When the wristwatch 1 is detected, by means of the skin contact detector 104 or of the ECG probe, on the body of a user for the first time, the following steps are performed:
- acquiring the actual physical parameters of the user, deemed to be the owner of the wristwatch 1 and therefore the entitled user of the service for which the identification is required,
- the owner physical parameters, acquired by the sensors 101, 102, 103, 104 and postprocessed signal processing modules 111, 112, 113, 114 are then stored in the memory 125 as reference physical parameters.

When the wristwatch 1 is detected, by means of the skin contact detector 104 or of the ECG probe 103, on the body of a user for a second or subsequent time and the user wants to use a service, the following steps are performed:
- acquiring the actual physical parameters of the user, corresponding to the reference physical parameters of the owner of the wristwatch 1,
- comparing, by means of the processor 120, the actual physical parameters with the stored reference physical parameters,
- producing, by means of the processor 120, a signal based on the step of comparing for enabling or disabling the use of the service by the user.

The signal is transmitted by means of the NFC communication unit 160 to the provider of the service to be enabled or to the external device or machine providing the requested service. The external machine recognizes the user who has been registered during the preliminary phase of the method and allows the service, for example the withdrawal of money.

According to embodiments of the present invention, when requesting a withdrawal of money the user requests a withdrawal of an amount of money from an automated machine for withdrawal simply using a keyboard on the machine. Then the method above is performed in order to provide the identification of the user. The execution of the method steps can be triggered automatically, i.e by means of a signal sent by automated machine to the wristwatch 1, or activated directly by the user, i.e. acting on the wristwatch 1.

When the wristwatch 1 is removed from the wrist of the user the following steps are performed:
- clear actual (carrier) data,
- if the wristwatch is connected to a power source, the method may comprise the further step of checking an ID of the charger. If the wristwatch is connected to a power source that belongs to the owner, in the home of the owner within a short delay, the carrier data may be restored. Alternatively, the carrier data are only cleared when the environment is not a known confident environment.

The comparison step may be more or less complex, for example depending on parameter defining a criticality of the service requested. In a procedure involving the withdrawal of money the step of comparison may be complex in the case in which a larger amount is requested compared to the case in which a smaller amount of money is requested. In addition to the data comparison between reference (owner) and actual (carrier) data, the comparison step may include one or more of following steps:
- check of the history of events in order to detect abnormal events. An abnormal event may be, according to a possible embodiment of the present invention, the fact that the wristwatch is removed and then worn again after a short period of time. Another abnormal event may be, according to a possible embodiment of the present invention, the fact that the wristwatch is removed and then worn again after some hours in a location remote from any usual one,
- check of the carrier environment, for example to verify, by means of the GPS sensor, if an operation which is normally performed in a specific location, e.g. removing the wristwatch 1 from wrist for connecting to a power source, is for the first time performed in another remote location,
- estimation of the stress level of the carrier, for example by combining data from a humidity detector with data from the ECG probe.

If abnormal events, locations remote from habitual ones or high stress level are detected, one of the following actions are performed:
- access to the service is denied,
- a user password is requested and then checked,
- other additional personal data are requested and then checked.
In the cases when additional personal data are requested, according to a possible embodiment of the present invention, the method further comprises:
- challenging the user with a challenge signal,
- receiving a response signal from the user to the challenge signal, the response signal characterizing the user,
- producing the identification signal based on the response signal.

The user is challenged, e.g. by requesting a sentence to be pronounced. The sentenced is received by microphone 101 and is used by the processor 120 to check if the requested sentence has been correctly pronounced and to compute a model of the vocal track of the user to be compared with the reference vocal track of the owner stored in the memory 125 as one of the reference physical parameters. If the user vocal track is equal to the reference vocal track, the user is authenticated and access to the service enabled.

Time could be needed for the evaluation of some biometric parameters and of the trusted environment. A "confidence level" parameter depending on the criticality of the service requested may control the time needed to perform the comparison step. With a higher value of the "confidence level" a larger difference between reference (owner) and actual (carrier) data is sufficient to obtain authentication than with a higher value of "confidence level".

Confidence level is normally higher if time for authentication is long, as more data can be collected. Confidence level is normally lower when a suspicious sequence of events takes places or when an unusual location is detected. In such cases a smaller difference between reference (owner) and actual (carrier) data is necessary to obtain authentication. According to a possible embodiment of the present invention, in the particular case of bank operations, the confidence level is low for high amount and the confidence level is higher for small amount of money.

According to a possible embodiment of the present invention, if abnormal events, locations remote from habitual ones or high stress level are detected, the action to be performed is different, depending on the confidence level. If the confidence level is high the request and check of a user password will be considered sufficient, if the confidence level is low other additional personal data will be required, for example in form of a response to a challenge.

### Reference Numerals:

- 1: Wristwatch
- 10: Identification device
- 101: Microphone
- 102: Accelerometer
- 103: ECG probe
- 104: Skin contact detector
- 111, 112, 113, 114: Signal conditioning and ADC
- 120: Processor
- 125: Memory
- 130: Power supply
- 140: UID (Unique Identification module)
- 150: Bluetooth communication unit
- 160: NFC communication unit
- 170: user interface

## Claims

1. Method for identifying a user of a service comprising the steps of:
- providing an identification device (10) including a plurality of sensors (101, 102, 103, 104) for acquiring a plurality of actual physical parameters of the user, a processing unit (120), a memory (125) for storing reference physical parameters and a communication unit (150, 160) for exchanging signals with a provider of the service,
- acquiring the plurality of actual physical parameters of the user,
- comparing the plurality of actual physical parameter with stored reference physical parameters,
- producing an identification signal based on the step of comparing for enabling or disabling the use of the service by the user,
- transmitting the identification signal to the provider of the service.

2. Method according to claim 1, wherein the sensors include a microphone (101) for registering the voice of the user.

3. Method according to claim 1, wherein the sensors include an accelerometer (102) for measuring the movements of at least a portion of the body of the user.

4. Method according to claim 1, wherein the sensors include an ECG probe (103) for measuring the heartbeat of the user.

5. Method according to claim 1, wherein the step of providing an identification device further include adding in the identification device a skin contact detector (104) for detecting if the identification device is in contact with the user.

6. Method according to claim 1, wherein the method further comprises determining the geographic position of the user.

7. Method according to claim 1, wherein the method further comprises:
- challenging the user with a challenge signal,
- receiving a response signal from the user to the challenge signal, the response signal characterizing the user,
- producing the identification signal based on the response signal.

8. Method according to claim 1, wherein communication unit is of the Bluetooth (150) or NFC (160) type.

9. Identification device (10) including a plurality of sensors (101, 102, 103, 104) for acquiring a plurality of physical parameters of the user, a memory (125) for storing reference physical parameters, a processing unit (120) configured for comparing the plurality of physical parameters with the reference physical parameters stored in the memory (125) and for generating a signal enabling or disabling the use of a service by the user and a communication unit (150, 160) for transmitting the signal.

10. Identification device (10) according to claim 9, wherein the identification device (10) is included in a wristwatch (1).

## Amended claims

### Amended claims in accordance with Rule 137(2) EPC.

1. Method for identifying a user of a service comprising the steps of:
- providing an identification device (10) including a plurality of sensors (101, 102, 103, 104) for acquiring a plurality of actual physical parameters of the user, a processing unit (120), a memory (125) for storing reference physical parameters and a communication unit (150, 160) for exchanging signals with a provider of the service,
- acquiring the plurality of actual physical parameters of the user,
- comparing the plurality of actual physical parameter with stored reference physical parameters,
- producing an identification signal based on the step of comparing for enabling or disabling the use of the service by the user,
- transmitting the identification signal to the provider of the service,
**characterized in that** the sensors include a microphone (101) for registering the voice of the user, an accelerometer (102) for measuring the movements of at least a portion of the body of the user, and an ECG probe (103) for measuring the heartbeat of the user.

2. Method according to claim 1, wherein the step of providing an identification device further include adding in the identification device a skin contact detector (104) for detecting if the identification device is in contact with the user.

3. Method according to claim 1, wherein the method further comprises determining the geographic position of the user.

4. Method according to claim 1, wherein the method further comprises:
- challenging the user with a challenge signal,
- receiving a response signal from the user to the challenge signal, the response signal characterizing the user,
- producing the identification signal based on the response signal.

5. Method according to claim 1, wherein communication unit is of the Bluetooth (150) or NFC (160) type.

6. Identification device (10) including a plurality of sensors (101, 102, 103, 104) for acquiring a plurality of physical parameters of the user, a memory (125) for storing reference physical parameters, a processing unit (120) configured for comparing the plurality of physical parameters with the reference physical parameters stored in the memory (125) and for generating a signal enabling or disabling the use of a service by the user and a communication unit (150, 160) for transmitting the signal, **characterized in that** the sensors include a microphone (101) for registering the voice of the user, an accelerometer (102) for measuring the movements of at least a portion of the body of the user, and an ECG probe (103) for measuring the heartbeat of the user.

7. Identification device (10) according to claim 6, wherein the identification device (10) is included in a wristwatch (1).
